# EUROPEAN PATENT APPLICATION

(11) **EP 4 258 149 A1**
(43) Date of publication of application: **11.10.2023**
(21) Application number: 22862332.8
(22) Date of filing: 17.05.2022
(51) Int. Cl.: G06F 21/64, G06F 21/44, G06Q 50/18, G06Q 20/42

(54) **FORGERY OR FALSIFICATION DETECTION METHOD FOR DETECTING FORGERY OR FALSIFICATION OF NFT, WHICH IS PERFORMED BY SERVER OF PLATFORM USING BLOCKCHAIN-BASED NFT**

(30) Priority: 24.02.2022 KR 20220024245
(71) Applicant: Kim, Tae Won, Uijeongbu-si, Gyeonggi-do 11806 (FR)
(72) Inventor: Kim, Tae Won, Uijeongbu-si, Gyeonggi-do 11806 (FR)
(74) Representative: Roos, Peter
(86) International application number: PCT/KR2022/007053
(87) International publication number: WO 2023/163286

(57) **Abstract**

Disclosed is a forgery detection method for detecting forgery of a non-fungible token (NFT) performed by a server of a platform using a blockchain-based NFT. The forgery detection method for detecting forgery of the NFT performed by the server of the platform using the blockchain-based NFT of the present invention includes acquiring object information representing information on an object of which registration to the platform is requested and extracting transaction information and ownership information included in the object information through analysis of the object information and the like.

## Description

### TECHNICAL FIELD

The present invention relates to a forgery detection method for detecting forgery of a non-fungible token (NFT) performed by a server of a platform using a blockchain-based NFT and, more particularly, to a method of detecting forgery of an NFT of an object of which the NFT is registered to a platform using a blockchain-based NFT.

### RELATED ART

Currently, asset values for various objects, such as various contents or products, have been created and through this, a case of managing or investing assets is increasing. In particular, it is difficult to measure the actual asset value of an object, such as sound source or ancient coin and work of art. In a present situation, the asset value of such object has increased sharply compared to the past and is attracting attention as an investment target.

In the case of an object, such as sound source or ancient coin and work of art, various third party institutions are present to determine the asset value of a corresponding object. The asset value of the corresponding object is evaluated through the third party institutions and guided to customers that desire investment. Also, a price corresponding to the asset value may be determined through an auction procedure to own the corresponding object beyond the asset value determined by the third party institutions.

Here, the corresponding object has the asset value and may be a target of a transaction with others accordingly. In a process of transacting the corresponding object, a method of confirming clear ownership and then delivering the object is required. To this end, proposed is technology or a method capable of verifying or transacting ownership information on the corresponding object using a blockchain-based non-fungible token (NFT).

Here, there is a risk of forgery for an NFT of an object in a blockchain-based network and, in this regard, no clear method for detecting the forgery of the NFT of the object is not proposed so far. In particular, there is an issue that a platform using the blockchain-based NFT has no policy or method for detecting forgery of an NFT pre-registered to the platform.

### DETAILED DESCRIPTION

### TECHNICAL SUBJECT

An objective of the present invention to solve the aforementioned issues is to provide a method of detecting forgery for a non-fungible token (NFT) of an object of which the NFT is registered to a platform using a blockchain-based NFT.

### SOLUTION

A method of detecting forgery of a non-fungible token (NFT) performed by a server of a platform using a blockchain-based NFT according to an example embodiment to achieve the objective refers to a forgery detection method for detecting forgery of an NFT performed by the server of the platform using the blockchain-based NFT and includes acquiring object information representing information on an object of which registration to the platform is requested and extracting transaction information and ownership information included in the object information through analysis of the object information; generating detection information including a unique identification value used to detect forgery of an NFT issued for the object based on the transaction information and the ownership information; encrypting the generated detection information including the unique identification value, the transaction information, and the ownership information based on an encryption method used in the blockchain-based network; issuing a blockchain-based NFT for the object to include the detection information on the object, the transaction information, and the ownership information that are encrypted based on the encryption method; and registering the blockchain-based NFT issued for the object to the platform and detecting the forgery in response to a request for verifying whether the NFT for the object is forged.

Here, the transaction information may include information on a number of transactions generated through the object verified from the object information, information on a date of the generated transaction, and information on an amount of each transaction in which the object is transacted.

Here, the ownership information may include information on an owner that owns the object verified from the object information at a current point in time and information on a date on which ownership of the owner is registered.

Here, the generating of the detection information may include calculating, as a transaction identification value, a sum of a sum of the number of transactions, an average of a preset digit number among a plurality of numbers included in the date, and an average of a preset digit number among a plurality of numbers included in the amount; calculating, as an ownership identification value, a sum of an average of a preset digit number among a plurality of numbers included in a serial number preset for identifying the owner on the platform and an average of a preset digit number among a plurality of numbers included in the registration date; calculating the unique identification value by applying a calculation algorithm preset to calculate the unique identification value to the transaction identification value and the ownership identification value; and generating the detection information used in the platform to detect the forgery of the NFT issued for the object by setting the calculated unique identification value to be included.

Here, the detecting of the forgery may include receiving a forgery status verification request event including NFT information requesting to verify whether an NFT that is one of a plurality of pre-registered NFTs in the platform is forged; calculating a comparison target identification value based on transaction information and ownership information of an object related to an NFT to be verified through decryption with respect to the NFT to be verified for which the verification is requested; and detecting whether the NFT to be verified is forged based on a result of comparison between the calculated comparison identification value and the unique identification value included in the detection information.

### EFFECTS

According to the present invention, since it is possible to determine forgery with respect to a plurality of non-fungible tokens (NFTs) registered to a platform using a blockchain-based NFT, it is possible to improve safety, stability, and transparency of an NFT registered to the platform and, through this, to provide a more reliable platform for a user that registers an NFT to the platform.

### BRIEF DESCRIPTION OF DRAWINGS

FIG. 1 is a hardware block diagram illustrating a server that performs a forgery detection method for detecting forgery of a non-fungible token (NFT) performed by a server of a platform using a blockchain-based NFT according to an example embodiment.
FIG. 2 illustrates an environment in which a forgery detection method for detecting forgery of an NFT performed by a server of a platform using a blockchain-based NFT is performed according to an example embodiment.
FIG. 3 is a flowchart illustrating a forgery detection method for detecting forgery of an NFT performed by a server of a platform using a blockchain-based NFT according to an example embodiment.
FIG. 4 is a flowchart illustrating a method of generating detection information in a forgery detection method for detecting forgery of an NFT performed by a server of a platform using a blockchain-based NFT according to an example embodiment.
FIG. 5 is a flowchart illustrating a method of detecting forgery in a forgery detection method for detecting forgery of an NFT performed by a server of a platform using a blockchain-based NFT according to an example embodiment.

### BEST MODE

Hereinafter, example embodiments will be described in detail with reference to the accompanying drawings.

Initially, the term "object" described in relation to a forgery detection method for detecting forgery of an NFT performed by a server of a platform using a blockchain-based NFT according to an example embodiment may refer to a thing, such as an ancient coin or work of art, that is attracting attention as an investment target due to a rapid increase in its asset value in a current situation compared to the past.

Also, the term "object" described in relation to a forgery detection method for detecting forgery of an NFT performed by a server of a platform using a blockchain-based NFT according to an example embodiment may preferentially refer to a target, such as work of art and real estimate present in a virtual space (e.g., a space, such as a metaverse) rather than a real space.

Also, the term "object" described in relation to a forgery detection method for detecting forgery of an NFT performed by a server of a platform using a blockchain-based NFT according to an example embodiment may preferentially refer to a target, such as an item or contents present in a virtual space (e.g., a space, such as an online game) rather than a real space.

In particular, the term "object" described in relation to a forgery detection method for detecting forgery of an NFT performed by a server of a platform using a blockchain-based NFT according to an example embodiment may preferentially refer to a target, such as a " work" to which a concept of "copyright" may apply and, for example, a "work" such as "sound source" may be present.

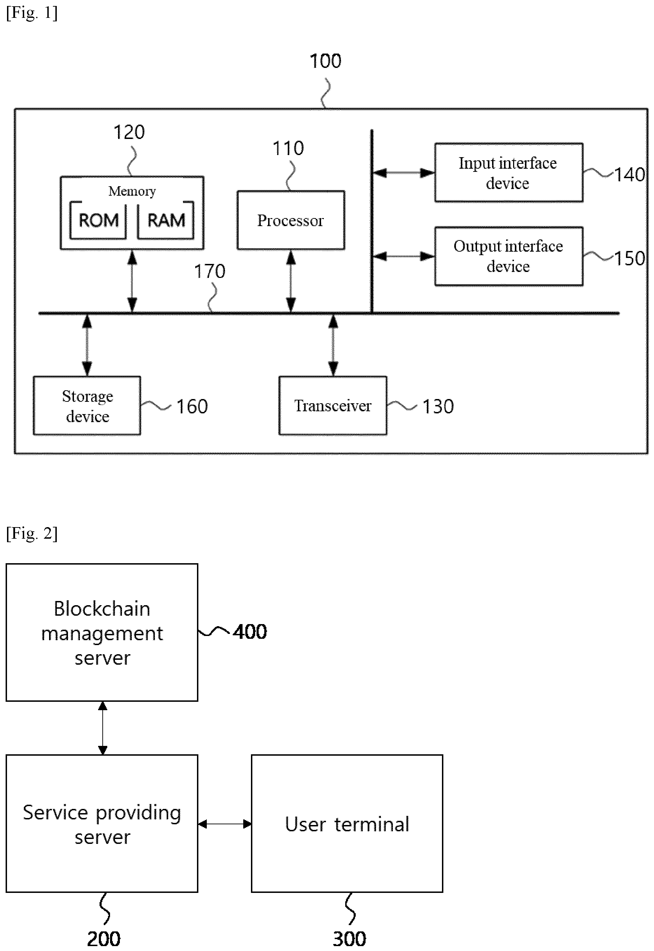

FIG. 1 is a hardware block diagram illustrating a server that performs a forgery detection method for detecting forgery of a non-fungible token (NFT) performed by a server of a platform using a blockchain-based NFT according to an example embodiment.

Referring to FIG. 1, a server 100 of a platform using a blockchain-based NFT according to an example embodiment may include at least one processor 110 configured to perform the forgery detection method and a memory 120 configured to store instructions for instructing at least one processor to perform at least one operation.

Here, the at least one processor 110 may refer to a central processing unit (CPU), a graphics processing unit (GPU), or a dedicated processor in which methods according to example embodiments are performed. Each of the memory 120 and a storage device 160 may be configured as at least one of a volatile storage medium and a non-volatile storage medium. For example, the memory 120 may be configured as at least one of read only memory (ROM) and random access memory (RAM).

Also, the server 100 of the present invention may include a transceiver 130 configured to perform communication through a wireless network. Also, the server 100 may further include an input interface device 140, an output interface device 150, and the storage device 460. Each of components included in the server 100 may be connected through a bus 170 and may perform mutual communication.

Here, at least one operation may refer to an operation related to a forgery detection method for detecting forgery of an NFT performed by a server of a platform using a blockchain-based NFT according to an example embodiment and more particularly, to an operation related to an operation method performed by the server 100 of the present invention.

Hereinafter, an environment of the forgery detection method for detecting forgery of the NFT performed by the server of the platform using the blockchain-based NFT according to an example embodiment described with reference to FIG. 1 will be further described with reference to FIG. 2.

FIG. 2 illustrates an environment in which a forgery detection method for detecting forgery of an NFT performed by a server of a platform using a blockchain-based NFT is performed according to an example embodiment.

Referring to FIG. 2, the forgery detection method for detecting forgery of the NFT performed by the server of the platform using the blockchain-based NFT may be performed by the server 100, which is described above with reference to FIG. 1. In FIG. 2, the server that operates or manages the platform may also be referred to as a "service providing server 200".

For example, the platform may refer to a platform that provides a role of issuing an NFT by using a "work", such as a "sound source" as an object or a service available to a user based on the issued NFT, and more particularly, to a platform that provides a service, such as registration and transaction of "sound source" to which the concept of "ownership" and "copyright" may apply and a service related to the "sound source".

Initially, the service providing server 200 may refer to a device, such as a server that operates or manages the platform according to an example embodiment and may be connected to a user terminal 300 of a user using the platform based on communication. Also, the service providing server 200 may be connected to a blockchain management server 400 capable of providing or managing and operating the blockchain-based network according to an example embodiment based on communication.

Here, when it is possible to autonomously provide or manage and operate the blockchain-based network, the service providing server 200 may not be connected to the separate blockchain management server 400. Also, the platform provided from the service providing server 200 may play a role of issuing the blockchain-based NFT for the object, registering the issued NFT, and managing the NFT issued for the object.

In particular, the service providing server 200 may play a role of detecting or determining forgery of the NFT registered to the platform and more particularly, play a role of detecting or determining forgery in transaction information or ownership information that is verifiable through the NFT.

In this regard, the service providing server 200 according to an example embodiment may generate a unique identification value available to detect or determine forgery of an NFT in a process of issuing the NFT or registering the NFT to the platform.

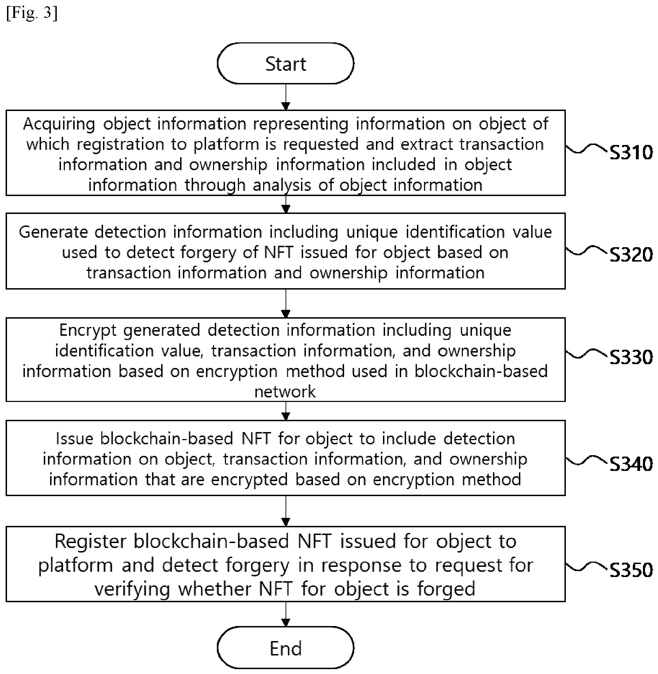

Hereinafter, the forgery detection method for detecting the NFT performed by the server of the platform using the blockchain-based NFT according to an example embodiment, such as the server 100 of FIG. 1 and the service providing server 200 of FIG. 2, will be further described with reference to FIGS. 3 to 5.

FIG. 3 is a flowchart illustrating a forgery detection method for detecting forgery of an NFT performed by a server of a platform using a blockchain-based NFT according to an example embodiment.

Referring to FIG. 3, the server of the platform using the blockchain-based NFT according to an example embodiment may refer to a server as described in FIG. 1 and a service providing server as described in FIG. 2 and may be performed by a device that operates or manages the platform, such as the aforementioned server and service providing server.

In particular, the server may play a role of issuing the blockchain-based NFT by using "sound source" as an object and may play a role of detecting or determining forgery of the issued NFT. In this regard, an example embodiment of the present invention for detecting, by the server of the platform, or determining forgery of the NFT will be further described.

Initially, the server of the platform using the blockchain-based NFT according to an example embodiment may acquire object information representing information on an object of which registration to the platform is requested and may extract transaction information and ownership information included in the object information through analysis of the object information (S310).

In detail, a user terminal that may represent a device of a user using the platform may request the server to register the object to the platform or issue an NFT. In response thereto, the server may request and acquire, from the user terminal information on the object of which registration to the platform is requested. Then, the server may analyze contents of the object based on a plurality of items included in the object information and may extract the transaction information and the ownership information from the object information.

For example, the transaction information may include information on a number of transactions generated through the object verified from the object information, information on a date of the generated transaction, and information on an amount of each transaction in which the object is transacted. The transaction information as above may be extracted in a manner of the following Table 1.

**[Table 1]**

| Category | Number | Transaction Date | Amount |
|---|---|---|---|
| 1 | 1 | 2021.01.23 | 580,600 won |
| 2 | 2 | 2021.06.17 | 565,300 won |
| 3 | 3 | 2021.11.02 | 590,700 won |
| ... | ... | ... | ... |

Also, the ownership information may include information on an owner that owns the object verified from the object information at a current point in time and information on a date on which ownership of the owner is registered. The ownership information as above may be extracted in a manner of the following Table 2.

**[Table 2]**

| Category | Owner | Registration Date |
|---|---|---|
| 1 | HONG Gil-dong | 2021.01.26 |
| 2 | GANG Gam-chan | 2021.06.18 |
| 3 | LEE Sun-shin | 2021.11.02 |
| ... | ... | ... |

The server of the platform may generate detection information including a unique identification value used to detect forgery of an NFT issued for the object based on the transaction information and the ownership information (S320).

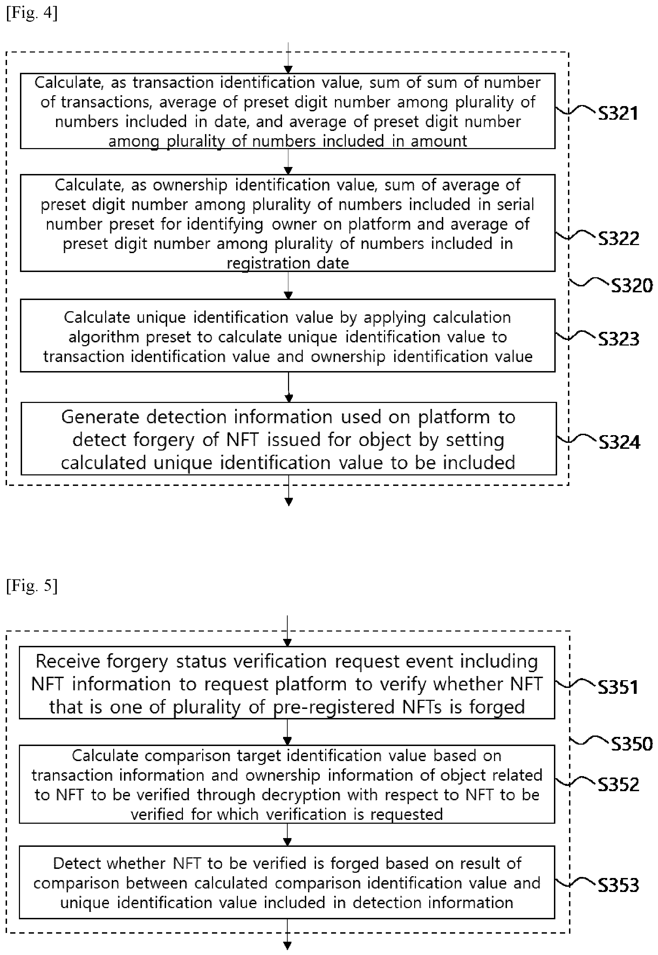

Here, a detailed process of generating, by the server of the platform, the detection information including the unique identification value used to detect forgery of the NFT issued for the object based on the transaction information and the ownership information will be further described with reference to FIG. 4.

FIG. 4 is a flowchart illustrating a method of generating detection information in a forgery detection method for detecting forgery of an NFT performed by a server of a platform using a blockchain-based NFT according to an example embodiment.

Referring to FIG. 4, the server of the platform using the blockchain-based NFT according to an example embodiment may calculate, as a transaction identification value, a sum of a sum of the number of transactions, an average of a preset digit number among a plurality of numbers included in the date, and an average of a preset digit number among a plurality of numbers included in the amount (S321).

For example, the server of the platform may calculate a sum of the number of transactions in the transaction information using the method described above with reference to FIG. 1 and in detail, for example, by referring to Table 1, may calculate a sum, "6", of the number of transactions by summing "1", "2", and "3". Then, the server of the platform may calculate an average of the preset digit number among the plurality of numbers included in the transaction date. In detail, for example, by referring to Table 1, if the preset digit number corresponds to "one's place in the month", "one's place" in "01" in "2021.01.23" that is a first transaction date may be "1". In this manner, the server of the platform may calculate an average of "1", "6", and "1" as "2.7".

Also, the server of the platform may calculate an average of the preset digit number among the plurality of numbers included in the amount. In detail, for example, referring to Table 1, if the preset digit number corresponds to hundred's place, "hundred's place" in "580,600 won" that is an amount of first round may be "6". In this manner, the server of the platform may calculate an average of "6", "3", and "7" as "5.3".

Then, the server of the platform may calculate "4.6" as a sum of "6", "2.7", and "5.3" that are values calculated based on the transaction information. The calculated "4.6" may be determined as the transaction identification value generated based on the transaction information.

Then, the server of the platform may calculate, as an ownership identification value, a sum of an average of a preset digit number among a plurality of numbers included in a serial number preset for identifying the owner on the platform and an average of a preset digit number among a plurality of numbers included in the registration date (S322).

For example, the server of the platform may preset a value of a serial number for identifying an owner in the ownership information in a manner as described above with reference to FIG. 2. For example, a serial number for "HONG Gil-dong may be set as a value of "202101260001", a serial number for "GANG Gam-chan" may be set as a value of "202106180006", and a serial number for "LEE Sun-shin" may be set as a value of "202111020017".

That is, the server of the platform may set a serial number for each owner based on a preset rule for setting a serial number used to identify a corresponding owner. Such a serial number may be set to have a different value as a unique value within the platform.

Then, the server of the platform may calculate an average of a preset digit number among a plurality of numbers included in a serial number set for each owner. In detail, if the preset digit number corresponds to "one's place", the server of the platform may calculate "4.6" as an average of "1", "6", and "7".

Then, the server of the platform may calculate an average of a preset digit number among a plurality of numbers included in a registration date for each owner. In detail, if the preset digit number corresponds to "one's place", one's place "2021.01.26" may be "6". The server of the platform may calculate "5.3" as an average of "6", "8", and "2" in this manner.

Then, the server of the platform may calculate "9.9" as a sum of "4.6" and "5.3" that are values calculated based on the ownership information and may determine the calculated value "9.9" as the ownership identification value generated based on the ownership information.

Then, the server of the platform may calculate the unique identification value by applying a calculation algorithm preset to calculate the unique identification value to the transaction identification value and the ownership identification value (S323).

Here, the server of the platform may calculate or determine the transaction identification value and the ownership identification value as a specific "number". A calculation algorithm capable of calculating a new "number" based on the calculated or determined "number" may be preset.

For example, the preset calculation algorithm may refer to a simple sum algorithm, a simple product algorithm, a simple average algorithm, and a random generation algorithm using a corresponding number as an input value.

Then, the server of the platform may generate the detection information used in the platform to detect the forgery of the NFT issued for the object through setting of including the calculated unique identification value (S234).

In detail, the server of the platform may convert the calculated unique identification value to a format of a code available in a blockchain-based network and may generate detection information including the unique identification value in the format of the code. That is, the server of the platform may convert information on the "number" corresponding to the unique identification value to the format of the code available in the blockchain-based network and may set the same to be included in the detection information.

The detection information generated through the aforementioned method may be managed in a form of a database based on an NFT of an object registered to the platform by the server of the platform. That is, the server of the platform may match an NFT issued for each of a plurality of objects registered to the platform and detection information generated in association with each corresponding NFT. Then, the server of the platform may construct information matched in a form of "NFT-detection information" in a form of the database in association with an NFT of the platform.

That is, referring to FIG. 3, the server of the platform using the blockchain-based NFT according to an example embodiment may encrypt the generated detection information including the unique identification value, the transaction information, and the ownership information based on an encryption method used in the blockchain-based network (S330).

For example, the encryption method used to encrypt the detection information, the transaction information, and the ownership information in the server of the platform may refer to an algorithm based on a hash function method that may be applied or available in the blockchain-based network, and may not necessarily be limited thereto.

Then, the server of the platform may issue a blockchain-based NFT for the object to include the detection information on the object, the transaction information, and the ownership information that are encrypted based on the encryption method (S340).

That is, the NFT issued for the object in the server of the platform may include detection information that may be used to detect or determine forgery of the NFT issued for the object and, in addition thereto, may further include transaction information and ownership information on the object.

Then, the server of the platform may register the blockchain-based NFT issued for the object to the platform and may detect the forgery in response to a request for verifying whether the NFT for the object is forged (S350).

Here, a detailed process of registering, by the server of the platform, a blockchain-based NFT issued for an object to the platform and, in response to a request for verifying whether the NFT for the object is forged, detecting the forgery will be further described with reference to FIG. 5.

FIG. 5 is a flowchart illustrating a method of detecting forgery in a forgery detection method for detecting forgery of an NFT performed by a server of a platform using a blockchain-based NFT according to an example embodiment.

Referring to FIG. 5, the server of the platform using the blockchain-based NFT according to an example embodiment may issue an NFT for an object through the method described above with reference to FIGS. 3 and 4 and may register the issued NFT to the platform. That is, a plurality of NFTs issued for a plurality of objects may be registered in advance to the platform.

Initially, the server of the platform may receive a forgery status verification request event including NFT information to request the platform to verify whether an NFT that is one of a plurality of pre-registered NFTs is forged (S351).

In detail, the server of the platform may receive the forgery status verification request event of requesting verification on whether an NFT is forged from a user terminal of one user among a plurality of users using the platform that is provided through the blockchain-based network. Here, the verification request event may represent a verification request message and may include NFT information that is information on the NFT to be verified for which verification is requested.

Then, the server of the platform may calculate a comparison target identification value based on transaction information and ownership information of an object related to an NFT to be verified through decryption with respect to the NFT to be verified for which the verification is requested (S352).

In detail, the server of the platform may decrypt the NFT to be verified based on an encryption method that is used in the blockchain-based network. Then, the server of the platform may extract transaction information and ownership information of the object from the NFT to be verified that is decrypted based on the encryption method used in the blockchain-based network. Here, the transaction information and the ownership information extracted by the server of the platform may be the same or similar as described above with reference to operation S310.

Then, the server of the platform may calculate the comparison target identification value capable of indicating a unique identification value of the NFT to be verified based on the transaction information and the ownership information extracted for the NFT to be verified. Here, the comparison target identification value calculated by the server of the platform may be the same or similar as described above with reference to operation S323.

Then, the server of the platform may detect whether the NFT to be verified is forged based on a result of comparison between the calculated comparison identification value and the unique identification value included in the detection information (S353).

That is, the server of the platform may verify a pre-registered NFT corresponding to the NFT to be verified. In detail, the server of the platform may verify the detection information by decrypting the pre-registered NFT based on the encryption method. Then, the server of the platform may compare the unique identification value included in the decrypted detection information and the comparison target identification value calculated for the NFT to be verified.

Here, when a database in which a preconstructed NFT and detection information related to the NFT match is present, the server of the platform may retrieve "NFT-detection information" for which verification is required based on the corresponding database, and may compare the comparison target identification value and the unique identification value for the NFT to be verified based on a value of the retrieved "NFT-detection information".

For example, the server of the platform may retrieve "NFT-detection information" on the NFT corresponding to the NFT to be verified from among a "plurality of items of NFT-detection information" included in the database and may compare the comparison target identification value and the unique identification value for the NFT to be verified based on the retrieved "NFT-detection information" on the NFT.

Then, when the comparison target identification value and the unique identification value are the same, the server of the platform may determine that the NFT to be verified is a not-forged NFT. On the other hand, when the comparison target identification value and the unique identification value differ from each other, the server of the platform may determine that the NFT to be verified is a forged NFT.

Through the aforementioned method, the server of the platform using the blockchain-based NFT according to an example embodiment may generate detection information that may be used to detect or determine forgery of an NFT issued for an object and may determine whether the NFT is forged based on the generated detection information.

In particular, in response to an occurrence of an event that an NFT is decrypted, the server of the platform according to an example embodiment may determine in real time whether the NFT is forged through the method of FIG. 5. When it is determined that the NFT is forged, the server of the platform may control a service (e.g., transaction or registration) using the corresponding NFT to not be provided.

That is, the "detection information" described herein may represent information corresponding to a standard available to determine whether the blockchain-based NFT is forged and may improve safety, stability, and reliability of the NFT registered to the platform using such detection information.

Although it is described herein that the server of the platform issues the blockchain-based NFT, it may be provided as an example only. That is, without being limited thereto, the blockchain-based NFT may be issued through the aforementioned blockchain management server. In this case, the blockchain-based NFT may be issued by transmitting, to the blockchain-based server, detection information, transaction information, and ownership information that are information required for the blockchain-based NFT.

The "platform" described above with reference to FIGS. 1 to 5 may represent a platform in which "sound source" is used as an object and the transaction information and the ownership information may represent information related to a transaction of the "sound source" and information related to ownership of the "sound source", respectively. That is, the present invention may be understood to propose a method of calculating a unique identification value used to detect or determine forgery of an NFT for the "sound source" based on information related to transaction of the "sound source" and information related to the ownership thereof.

The methods according to the present invention may be implemented in a form of program instructions executable through various computer methods and may be recorded in computer-readable recording media. The media may include, alone or in combination, program instructions, data files, data structures, etc. The program instructions recorded in the computer-readable recording media may be specially designed and configured for the present invention or may be known to those skilled in the computer software art and thereby available.

Examples of the media may include a hardware device specially configured to store and execute a program instruction, such as read only memory (ROM), random access memory (RAM), flash memory, etc. Examples of the program instruction may include a high-level language code executable by a computer using an interpreter as well as a machine language code such as one produced by a compiler. The hardware device may be configured to operate as at least one software module to perform an operation of the present invention, or vice versa.

Also, the methods or the apparatuses may be implemented through combination of or may be implemented through separation of all of or a portion of the components or functions.

Although the present invention is described with reference to the example embodiments, it will be apparent to those skilled in the art that various modifications and changes may be made to the present invention without departing from the spirit and scope of the present invention as disclosed in the claims.

### Explanation of Symbols

| | | | |
|---|---|---|---|
| 100: | server | 110: | processor |
| 120: | memory | 130: | transceiver |
| 140: | input interface device | 150: | output interface device |
| 160: | storage device | 170: | bus |
| 200: | service providing server | 300: | user terminal |
| 400: | blockchain management server | | |

## Claims

1. A forgery detection method for detecting forgery of a non-fungible token (NFT) performed by a server of a platform using a blockchain-based NFT, the forgery detection method comprising:
acquiring object information representing information on an object of which registration to the platform is requested and extracting transaction information and ownership information included in the object information through analysis of the object information;
generating detection information including a unique identification value used to detect forgery of an NFT issued for the object based on the transaction information and the ownership information;
encrypting the generated detection information including the unique identification value, the transaction information, and the ownership information based on an encryption method used in the blockchain-based network;
issuing a blockchain-based NFT for the object to include the detection information on the object, the transaction information, and the ownership information that are encrypted based on the encryption method; and
registering the blockchain-based NFT issued for the object to the platform and detecting the forgery in response to a request for verifying whether the NFT for the object is forged.

2. The forgery detection method of claim 1, wherein the transaction information includes information on a number of transactions generated through the object verified from the object information, information on a date of the generated transaction, and information on an amount of each transaction in which the object is transacted.

3. The forgery detection method of claim 2, wherein the ownership information includes information on an owner that owns the object verified from the object information at a current point in time and information on a date on which ownership of the owner is registered.

4. The forgery detection method of claim 3, wherein the generating of the detection information comprises:
calculating, as a transaction identification value, a sum of a sum of the number of transactions, an average of a preset digit number among a plurality of numbers included in the date, and an average of a preset digit number among a plurality of numbers included in the amount;
calculating, as an ownership identification value, a sum of an average of a preset digit number among a plurality of numbers included in a serial number preset for identifying the owner on the platform and an average of a preset digit number among a plurality of numbers included in the registration date;
calculating the unique identification value by applying a calculation algorithm preset to calculate the unique identification value to the transaction identification value and the ownership identification value; and
generating the detection information used in the platform to detect the forgery of the NFT issued for the object by setting the calculated unique identification value to be included.

5. The forgery detection method of claim 4, wherein the detecting of the forgery comprises:
receiving a forgery status verification request event including NFT information requesting to verify whether an NFT that is one of a plurality of pre-registered NFTs in the platform is forged;
calculating a comparison target identification value based on transaction information and ownership information of an object related to an NFT to be verified through decryption with respect to the NFT to be verified for which the verification is requested; and
detecting whether the NFT to be verified is forged based on a result of comparison between the calculated comparison identification value and the unique identification value included in the detection information.
